(19)

Europäisches
Patentamt
European
Patent Office
Office européen
des brevets

(11) **EP 2 662 999 A1**

(12) **EUROPEAN PATENT APPLICATION**
published in accordance with Art. 153(4) EPC

(43) Date of publication:
**13.11.2013 Bulletin 2013/46**

(21) Application number: **12732222.0**

(22) Date of filing: **04.01.2012**

(51) Int Cl.:
*H04J 11/00* (2006.01)       *H04J 1/00* (2006.01)

(86) International application number:
**PCT/JP2012/050029**

(87) International publication number:
**WO 2012/093674 (12.07.2012 Gazette 2012/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.01.2011   JP 2011000652**

(71) Applicants:
• **NEC CASIO Mobile Communications, Ltd.
Kawasaki-shi
Kanagawa 211-8666 (JP)**

• **NTT DoCoMo, Inc.
Tokyo 100-6150 (JP)**

(72) Inventor: **SAKAI, Masahito
Kawasaki-shi
Kanagawa 211-8666 (JP)**

(74) Representative: **Vossius & Partner
Siebertstrasse 4
81675 München (DE)**

(54) **RECEIVER, RECEPTION METHOD, AND COMPUTER PROGRAM**

(57)      Provided are a receiver, a reception method, and a computer program, which make it possible to calculate reception quality (SNR) more exactly when simultaneous determination is performed based on the reception quality of a control channel. The receiver comprises: a calculation means for calculating the ratio of the signal power in each reference signal to the average signal power over an entire band; a determination means for determining whether or not the maximum value of the calculated ratio exceeds a predetermined threshold; and a first correction means for correcting the signal power and noise power when the maximum value is determined as exceeding the threshold.

Fig.3

EP 2 662 999 A1

**Description**

{Technical Field}

The present application claims priority from Japanese Patent Application No. 2011-000652 filed on January 5, 2011, the contents of which are incorporated herein by reference.
The present invention relates to a receiver, a reception method, and a computer program.

{Background Art}

An Orthogonal Frequency Division Multiplexing (OFDM) method, such as Long Term Evolution (LTE), standardized by 3rd Generation Partnership Project (3GPP) attracts attention as a communication method for the next generation. In a communication method such as LTE, a receiver conducts determination on synchronization on the basis of reception quality of a control channel, and reports a state of synchronization to a higher-level layer, as stipulated in non-patent literatures NPL 1 and NPL 2. Then, a judgment is made on a start and an end of a process of transmission to a base station, according to information such as a result of determination on synchronization by the receiver, and so on.
In the case where a reception quality of a control channel at a receiver becomes more deteriorated than a specified level, conducted is a synchronization determination process in which data transmission is interrupted, assuming that synchronization has been canceled. For the process, the receiver calculates, for example, a Signal to Noise Power Ratio (SNR) as an index expressing a reception quality.
In 3GPP, it is specified that a synchronization determination is made by using a Block Error Rate (BLER) of a control channel. For the determination, it is necessary to measure a reception quality index reflecting the status of a propagation channel, and a method such as Exponential Effective SNR Mapping (EESM) is usually used. In EESM, after calculating an SNR of each Reference Signal (RS), a reception quality SNR of an allover bandwidth is calculated by way of an EESM computation.
In a conventional communication method, Wideband-Code Division Multiple Access (W-CDMA), a value of Signal to Interference Power Ratio (SIR) measured by a receiver is compared to $Q_{in}$ and $Q_{out}$ as reference values for a synchronization determination process.
Moreover, proposed in PTL 1 is a method in which a moving average process is additionally conducted in such a way that a stable synchronization determination and a transmission control are carried out even though a measured SIR includes a variation.
Furthermore, PTL 2 proposes another method in which a reference value is adjusted on the basis of a traveling speed of a mobile station.
In the OFDM method, a reception quality SNR reflecting a BLER of a control channel can be calculated by way of using EESM, being independent of channel propagation conditions, in such a way as S. Mumtaz and others disclose in NPL 3.
Incidentally, it is needed in an EESM computation to calculate an SNR of each RS in advance. Since an SNR is calculated as a ratio of a noise power and a signal power, calculations of a noise power and a signal power of each RS are  needed. In this case, if a noise power is calculated for each RS, the number of samples is not big enough so that the noise power cannot be calculated with sufficient accuracy. Accordingly, it becomes necessary to use a noise power of an allover bandwidth average.

{Citation List}

{Patent Literature}

PTL 1: JP2005-86587A
PTL 2: JP2005-253055A

{Non-patent Literature}

NPT 1: 3GPP, TS 36.133 v8.7.0, September of 2009
NPT 2: 3GPP, TS 36.213 v8.8.0, September of 2009
NPT 3: S. Mumtaz, A. Gamerio, J. Rodriguez, EESM for IEEE 802.16e: Wimax, 7th IEEE/ACIS International Conference on Computer and Information Science, IEEE ICIS/ACIS 2008, May 14 to 16, 2008

{Summary of Invention}

{Technical Problem}

Unfortunately, in the case of calculating an SNR of each RS, a noise power estimated value common to an allover bandwidth is used, and therefore an SNR estimated value of each RS becomes much different from an actual value when some partial bandwidth includes a large interference wave.

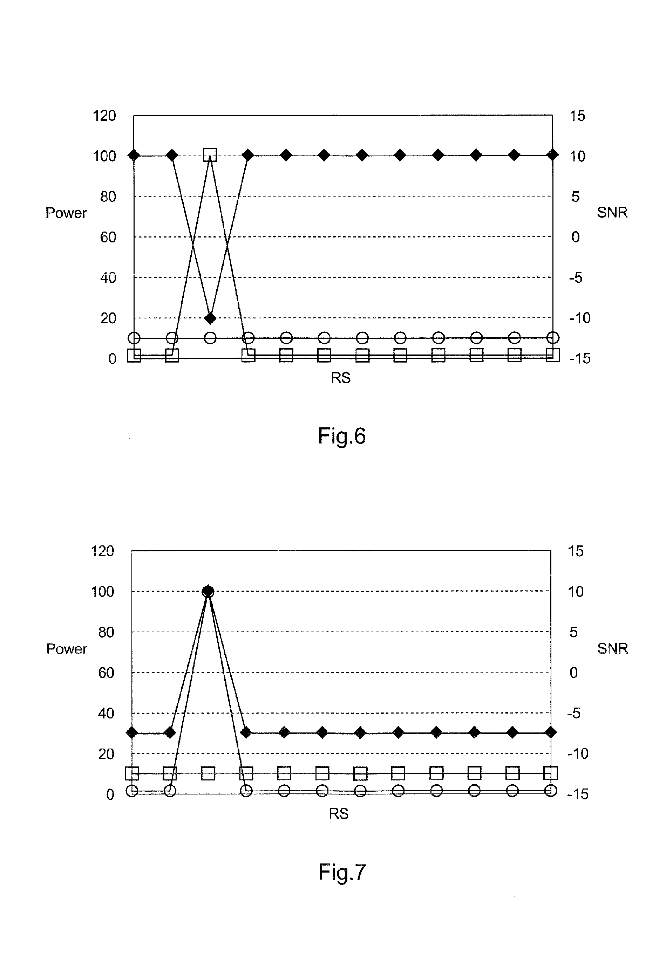

As shown in Fig. 6, when a large interference wave actually exists only in some partial bandwidth, a calculation by using a noise power of an allover bandwidth average results in a wrong SNR value calculated, in such a way as if an RS with a high SNR in reality is with a low SNR, and as if an RS with a low SNR in reality is with a high SNR, as show in Fig. 7. Incidentally, in Fig. 6 and Fig. 7, a square represents a noise power, a circle means a signal power, and a lozenge represents an SNR.

Due to the nature of an EESM computation, even when a remarkably large interference wave exists in some partial bandwidth so as to deteriorate a receiving performance, sometimes a reception quality SNR value reaches a noise floor level and synchronization is not canceled.

In an EESM computation, an Effective SNR is calculated according to Formula (1). When a remarkably large interference exists only in some partial bandwidth, an expression mentioned below;

{Math. 1}

$$e^{\frac{-\gamma_1}{\beta}}$$

gives a value "1" for an RS with an interference, and gives "0" for any other RS.

{Math. 2}

$$\gamma_{eff} = -\beta \ln \frac{1}{N_{RS}} \sum_{i=0}^{N_{RS}-1} e^{\frac{-\gamma_1}{\beta}}$$

$$\cdots \text{Formula (1)}$$

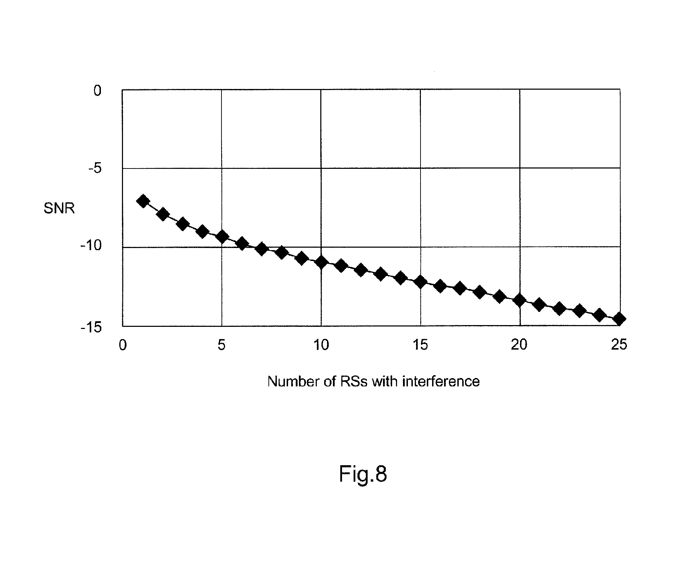

Therefore, as shown in Fig. 8, a reception quality SNR reaches a noise floor level, at a certain value. Incidentally, Fig. 8 is a diagram that shows reception quality SNRs in the case of ß= 0.05, and a bandwidth being 5 MHz.

Thus, it is an objective of the present invention to provide a receiver, a reception method and a computer program that give a solution to the issue described above; and, in other words, which are able to calculate a reception quality SNR more accurately.

{Solution to Problem}

In order to give a solution to the issue described above, a receiver according to the present invention includes: a calculation means calculating a ratio of a signal power of each reference signal (RS) to an overall bandwidth average of the signal power; a determination means determining whether or not a maximum value of calculated ratios exceeds a predetermined threshold; and a first correction means correcting the signal power and the noise power when it is determined that the maximum value exceeds the predetermined threshold.

Furthermore, an aspect of the receiver according to the present invention further includes; a computation means calculating a Signal to Noise Power Ratio (SNR) by way of an Exponential Effective SNR Mapping (EESM) computation by using the signal power and the noise power supplied from the first correction means; and a second correction means correcting the SNR according to a level of an interference wave and a ratio of the interference wave to the bandwidth.

Moreover, a reception method according to the present invention includes steps of: calculating a ratio of a

3

signal power of each reference signal to an overall bandwidth average of the signal power; determining whether or not a maximum value of calculated ratios exceeds a predetermined threshold; and correcting the signal power and the noise power when it is determined that the maximum value exceeds the predetermined threshold.

Furthermore, a computer program according to the present invention is a computer program to operate a computer for an operation including steps of calculating a ratio of a signal power of each reference signal to an overall bandwidth average of the signal power; determining whether or not a maximum value of calculated ratios exceeds a predetermined threshold; and correcting the signal power and the noise power when it is determined that the maximum value exceeds the predetermined threshold.

{Advantageous Effects of Invention}

According to an aspect of the present invention, it becomes possible to provide a receiver, a reception method and a computer program that are able to calculate a reception quality SNR more accurately.

{Brief Description of Drawings}

Fig. 1 is a block diagram showing a configuration example of a receiver.
Fig. 2 is a block diagram showing a configuration example of a reception quality SNR estimation unit 16.
Fig. 3 is a flowchart for explaining an estimation process on a reception quality SNR.
Fig. 4 is a drawing that shows an example of an SNR.
Fig. 5 is a block diagram showing a configuration example of computer hardware.
Fig. 6 is a drawing that shows an example of an actual SNR.
Fig. 7 is a drawing that shows an example of an SNR by way of a conventional calculation.
Fig. 8 is a diagram that shows a floor level of SNRs after conventional EESM.

{Description of Embodiments}

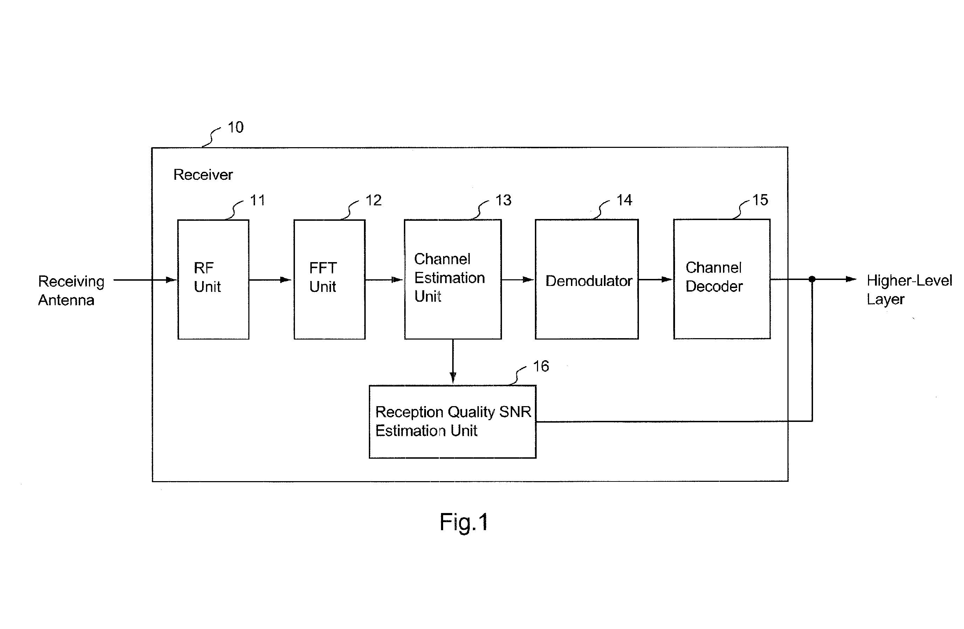

A receiver according to an embodiment of the present invention is explained below, by using LTE standardized in 3GPP as an example, with reference to Fig. 1 through Fig. 5. Incidentally, the present invention is not limited to the system explained below.

Fig. 1 is a block diagram showing a configuration example of a receiver according to LTE. A receiver 10 is an example of a receiver, and it includes: an RF unit 11, a Fast Fourier Transform (FFT) unit 12, a channel estimation unit 13, a demodulator 14, a channel decoder 15, and a reception quality SNR estimation unit 16.

The RF unit 11 A/D-converts (to convert from Analog to Digital) a signal received by a receiving antenna (not shown) of the receiver 10. The RF unit 11 supplies the received signal, which has been converted into a digital signal, to the FFT unit 12. Then, the FFT unit 12 transforms the received signal into a datum of frequency components by way of a Fourier Transform.

The channel estimation unit 13 estimates a channel estimation matrix (hereinafter, which may also be called a "channel estimated value") which shows channel status, by using a Reference Signal (RS) that is a known signal mapped beforehand in a frequency resource. The channel estimation unit 13 supplies the channel estimation matrix to the demodulator 14 and the reception quality SNR estimation unit 16. Then, the demodulator 14 demodulates an I-component and Q-component into likelihood information, on the basis of the channel estimation matrix and the like, which is estimated in the channel estimation unit 13. Meanwhile, the channel decoder 15 carries out error correction decoding and error detection.

The reception quality SNR estimation unit 16 estimates a reception quality SNR, on the basis of the channel estimation matrix estimated in the channel estimation unit 13, and then supplies the reception quality SNR to a higher-level layer that performs a synchronization determination process.

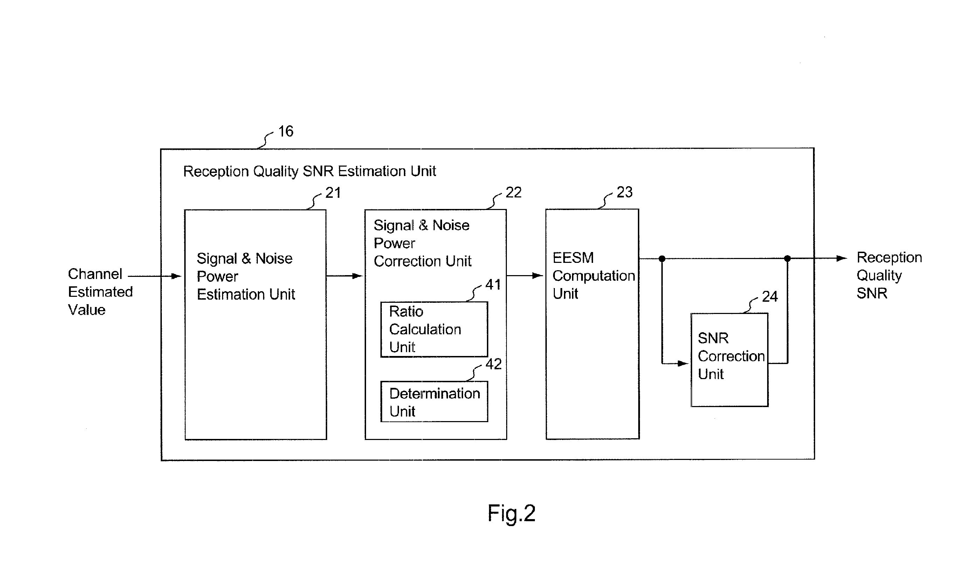

Fig. 2 is a block diagram showing a configuration example of the reception quality SNR estimation unit 16. The reception quality SNR estimation unit 16 includes a signal & noise power estimation unit 21, a signal & noise power correction unit 22, an EESM computation unit 23, and an SNR correction unit 24.

The signal & noise power estimation unit 21 estimates a signal power and a noise power according to the channel estimated value supplied from the channel estimation unit 13. The signal & noise power correction unit 22 estimates an averaged signal power and an averaged noise power within a time period of a measuring object, and corrects the signal power and the noise power. Then, the signal & noise power correction unit 22 calculates a ratio of a signal power of each RS to an overall bandwidth average of the signal power, and makes a determination on whether or not a maximum value of calculated ratios exceeds a predetermined threshold.

The signal & noise power correction unit 22 includes a ratio calculation unit 41 and a determination unit 42. The ratio calculation unit 41 calculates a ratio of a signal power of each RS to an overall bandwidth average of a signal power. The determination unit 42 makes a determination on whether or not a maximum value of ratios, each of which is a ratio of a signal power of each RS to an overall bandwidth average of a signal power, exceeds a predetermined threshold.

The EESM computation unit 23 calculates a reception quality SNR by way of an EESM computation by using the signal power and the noise power. The SNR correction unit 24 corrects the reception quality SNR according to a level of an interference wave and a ratio of the interference wave to the bandwidth.

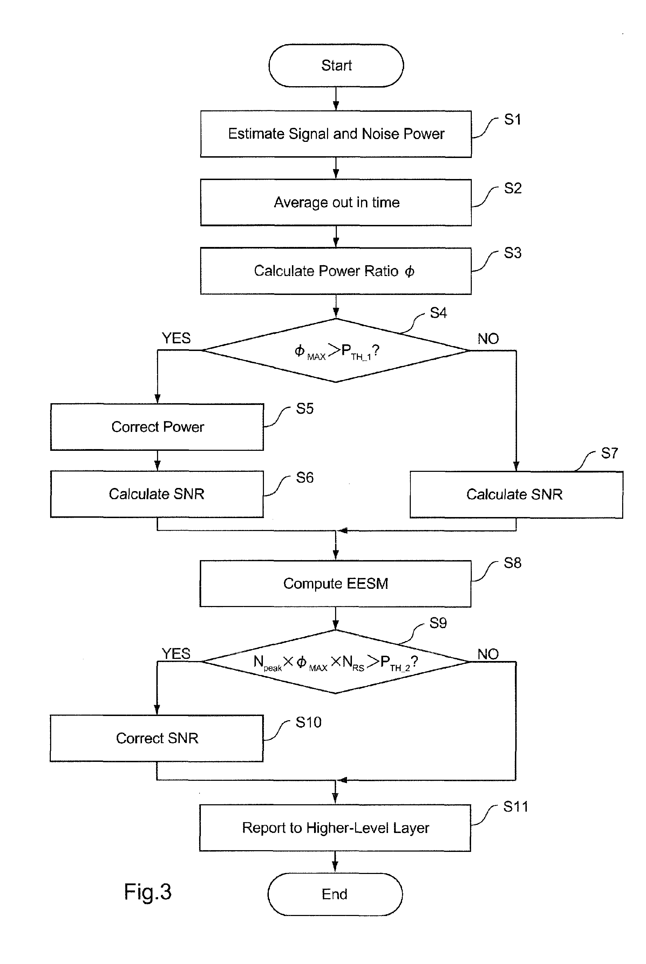

Fig. 3 is a flowchart for explaining an estimation process on a reception  quality SNR. At Step S1, the signal & noise power estimation unit 21 calculates a signal power S of each Reference Signal (RS) and a noise power $\sigma^2$ of an overall bandwidth average, by using a channel estimated value $h_{ZF}$ that is a value after zero forcing, a receiving antenna a, a transmission antenna b, a slot number n, and an RS index i according to Formula (2) and Formula (3).
{Math3}

$$\sigma^2(a,b,n) = \frac{1}{N_{RS}-3} \sum_{i=1}^{N_{RS}-3} \left| \frac{h_{ZF}(a,b,n,i) + h_{ZF}(a,b,n,i+2)}{2} - \frac{h_{ZF}(a,b,n,i-1) + h_{ZF}(a,b,n,i+1)}{2} \right|^2$$

$\cdots$ Formula (2)

{Math4}

$$S(a,b,n,i) = \left| h_{ZF}(a,b,n,i) \right|^2 - \sigma^2(a,b,n)$$

$\cdots$ Formula (3)

At Step S2, the signal & noise power correction unit 22 estimates an averaged signal power $S_{ave}$ and an averaged noise power $\sigma^2_{ave}$ within a time period of a measuring object according to Formula (4) and Formula (5), on the basis of the signal power and the noise power calculated by way of a process of Step S1, by using the number of receiving antennas $N_{rx}$, the number of transmission antennas $N_{tx}$, a measure start slot number $n_{start}$, and a measure end slot number $n_{end}$.
{Math5}

$$S_{ave}(i) = \frac{1}{(n_{end} - n_{start} + 1) N_{rx} N_{tx}} \sum_{n=n_{start}}^{n_{end}} \sum_{a=0}^{N_{rx}-1} \sum_{b=0}^{N_{tx}-1} S(a,b,n,i)$$

$\cdots$ Formula (4)

{Math6}

$$\sigma^2{}_{ave} = \frac{1}{(n_{end} - n_{start} + 1) N_{rx} N_{tx}} \sum_{n=n_{start}}^{N_{end}} \sum_{a=0}^{N_{rx}-1} \sum_{b=0}^{N_{tx}-1} \sigma^2(a,b,n)$$

$$\cdots \text{Formula (5)}$$

At Step S3, the ratio calculation unit 41 of the signal & noise power correction unit 22 calculates a ratio $\phi(i)$ of a reception power of each RS to a reception power of an overall bandwidth average (hereinafter, the ratio $\phi(i)$ is also called a power ratio $\phi(i)$), by using the number of RSs included in a bandwidth NRS, according to Formula (6) through Formula (8).
{Math7}

$$S_{BW\_ave} = \frac{1}{N_{RS}} \sum_{i=0}^{N_{RS}-1} S_{ave}(i)$$

$$\cdots \text{Formula (6)}$$

{Math8}

$$\phi(i) = \frac{S_{ave}(i) + \sigma^2{}_{ave}}{S_{BW\_ave} + \sigma^2{}_{ave}}$$

$$\cdots \text{Formula (7)}$$

{Math9}

$$\phi_{MAX} = \max_{0 \le i \le N_{RS}-1} (\phi(i))$$

$$\cdots \text{Formula (8)}$$

At Step S4, the determination unit 42 of the signal & noise power correction unit 22 compares a maximum value of power ratios $\phi(i)$ obtained above, $\phi_{MAX}$, with a predetermined threshold $P_{TH\_1}$, and makes a determination on whether or not the maximum value $\phi_{MAX}$ exceeds the threshold $P_{TH\_1}$. Furthermore, the signal & noise power correction unit 22 counts the number of RSs having an obtained power ratio $\phi(i)$ that exceeds the threshold $P_{TH\_1}$ in order to obtain the number of RSs having an power ratio $\phi(i)$ that exceeds the threshold $P_{TH\_1}$, the number of RSs being $N_{peak}$. Moreover, in the case where the averaged signal power $S_{ave}$ is a negative value, the signal & noise power correction unit 22 replaces the averaged signal power $S_{ave}$ being a negative value with a predetermined minimum value (MIN_VAL), as Formula (9) shows.
{Math10}

$$S_{ave\_tmp}(i) = \begin{cases} S_{ave}(i) & if \ S_{ave}(i) > 0 \\ MIN\_VAL & if \ S_{ave}(i) \leq 0 \end{cases}$$

$$\cdots \text{Formula (9)}$$

At Step S4, if it is determined that the maximum value $\phi_{MAX}$ exceeds the threshold $P_{TH\_1}$, operation progresses to Step S5, and the signal & noise power correction unit 22 performs a power correction process according to Formula (10). Then, at Step S6, the signal & noise power correction unit 22 calculates an SNR of each RS, according to Formula (11) through Formula (13). After Step S6, operation progresses to Step S8.
{Math11}

$$S_{BW\_ave\_tmp} = \frac{1}{N_{RS}} \sum_{i=0}^{N_{RS}-1} S_{ave\_tmp}(i)$$

$$\cdots \text{Formula (10)}$$

{Math 12}

$$\sigma^2_{ave\_cal}(i) = \frac{\sigma^2_{ave} \times S_{ave\_tmp}(i)}{S_{BW\_ave\_tmp}}$$

$$\cdots \text{Formula (11)}$$

{Math13}

$$S_{ave\_cal}(i) = \sigma^2_{ave} + S_{ave}(i) - \sigma^2_{ave\_cal}(i)$$

$$\cdots \text{Formula (12)}$$

{Math14}

$$\gamma(i) = \frac{S_{ave\_cal}(i)}{\sigma^2_{ave\_cal}(i)}$$

$$\cdots \text{Formula (13)}$$

At Step S4, if it is determined that the maximum value $\phi_{MAX}$ does not exceed the threshold $P_{TH\_1}$, operation progresses to Step S7. Then, no correction process is performed, and the signal & noise power correction unit 22 calculates an SNR of each RS, according to Formula (14). After Step S7, operation progresses to Step S8.
{Math15}

$$\gamma(i) = \frac{S_{ave\_tmp}(i)}{\sigma^2_{ave}}$$

$\cdot \cdot \cdot$ Formula (14)

At Step S8, the EESM computation unit 23 calculates a reception quality SNR by using the SNR value by way of an EESM computation according to Formula (15) and Formula (16).
{Math16}

$$\gamma_{eff} = -\beta \ln \frac{1}{N_{RS}} \sum_{i=0}^{N_{RS}-1} e^{\frac{-\gamma(i)}{\beta}}$$

$\cdot \cdot \cdot$ Formula (15)

{Math17}

$$\gamma_{eff} = -\beta \ln \frac{1}{N_{RS}} \sum_{i=0}^{N_{RS}-1} e^{\frac{-\gamma(i)}{\beta}}$$

$\cdot \cdot \cdot$ Formula (16)

Wherein, a parameter ß is determined according to the number of receiving antennas and transmission antennas, a bandwidth, a code rate of a control channel, and the like. The parameter ß is adjusted in such a way that the same reception quality SNR is output in the case of the same BLER even under different propagation conditions.

At Step S9, the SNR correction unit 24 makes a determination on whether or not a condition of $Np_{eak} \times \phi_{MAX} \times N_{RS} >$ a threshold $P_{TH\_2}$ is fulfilled, on the basis of the values of the number of RSs; $N_{RS}$, the maximum value; $\phi_{MAX}$, and the number of RSs; $N_{peak}$.

Wherein, the threshold $P_{TH\_2}$ is a predetermined threshold on a power ratio, which is so adjusted by way of a simulation or an experiment as to be an optimum value.

If it is determined at Step S9 that the condition of $N_{peak} \times \phi_{MAX} \times N_{RS} >$ a threshold $P_{TH\_2}$ is fulfilled, operation progresses to Step S10 so that the SNR correction unit 24 performs another correction process as shown in Formula (17). After Step S10, operation progresses to Step S11.
{Math18}

$$\gamma_{eff\_dB} = \gamma_{eff\_dB} - \kappa_{cal} \times (N_{peak} \times \phi_{MAX} - \frac{P_{TH\_2}}{N_{RS}})$$

$\cdots$ Formula (17)

Wherein, in the case of $\gamma_{eff\_dB} < \gamma_{MIN}$, $\gamma_{eff\_dB}$ is made equal to be $\gamma_{MiN}$.

Incidentally, an SNR correction coefficient; $\kappa_{cal}$, and an Effective SNR minimum value; $\gamma_{MIN}$ are so adjusted by way of a simulation or an experiment as to be optimum values.

If it is determined at Step S9 that the condition of $N_{peak} \times \phi_{MAX} \times N_{RS} >$ a threshold $P_{TH\_2}$ is not fulfilled, no correction process is performed and operation progresses to Step S11.

At Step S11, either the EESM computation unit 23 or the SNR correction unit 24 reports the reception quality SNR value obtained in the way described above, to the higher-level layer; and then the estimation process on the reception quality SNR ends.

In this way as described above, an accurate reception quality can be measured by independently performing a correction process for a signal power, a noise power, and an SNR, only when a large interference wave exists in some partial bandwidth.

Though a determination with respect to a correction process for a signal power and a noise power is made by using Formula (18) in the example described above, the determination may be made by using values that Formula (19) through Formula (22) show.

{Math19}

$$\phi_{MAX} = \max_{0 \leq i \leq N_{RS}-1} \left( \frac{S_{ave}(i) + \sigma^2_{ave}}{S_{BW\_ave} + \sigma^2_{ave}} \right)$$

$\cdots$ Formula (18)

{Math20}

$$\phi_{MAX} = \max_{0 \leq i \leq N_{RS}-1} \left( \frac{S_{ave}(i) + \sigma^2_{ave}}{S_{BW\_ave\_tmp} + \sigma^2_{ave}} \right)$$

$\cdots$ Formula (19)

{Math21}

$$\phi_{MAX} = \max_{0 \leq i \leq N_{RS}-1} \left( \frac{S_{ave}(i)}{S_{BW\_ave}} \right)$$

$\cdots$ Formula (20)

{Math 22}

9

$$\phi_{MAX} = \max_{0 \leq i \leq N_{RS}-1} \left( \frac{S_{ave}(i)}{S_{BW\_ave\_tmp}} \right)$$

$\cdots$ Formula (21)

{Math 23}

$$\phi_{MAX} = \max_{0 \leq i \leq N_{RS}-1} \left( S_{ave}(i) \right)$$

$\cdots$ Formula (22)

Furthermore, though the determination condition of $N_{peak} \times \phi_{MAX} \times N_{RS} >$ a threshold $Pr_{H\_2}$ is used in the correction process for the SNR in the above example, a condition of $\phi_{MAX} >$ a threshold $P_{TH\_2}$ may be used instead. Incidentally, a correction expression in this case is as Formula (23) shows.
{Math 24}

$$\gamma'_{eff\_dB} = \gamma_{eff\_dB} - \kappa_{cal} \times ( \phi_{MAX} - P_{TH\_2} )$$

$\cdots$ Formula (23)

Moreover, though all RSs are used for a calculation and computation in the SNR calculation process and the EESM computation process for each RS at Step S7 and Step S8 in the above example, a sampling operation with an optional sampling interval may be conducted for RSs to be used if the determination condition at Step S4 is not fulfilled. Furthermore, a control for changing the sampling interval, depending on a bandwidth, may be conducted in such a way that the sampling interval is narrowed for a narrow bandwidth and widened for a wide bandwidth.

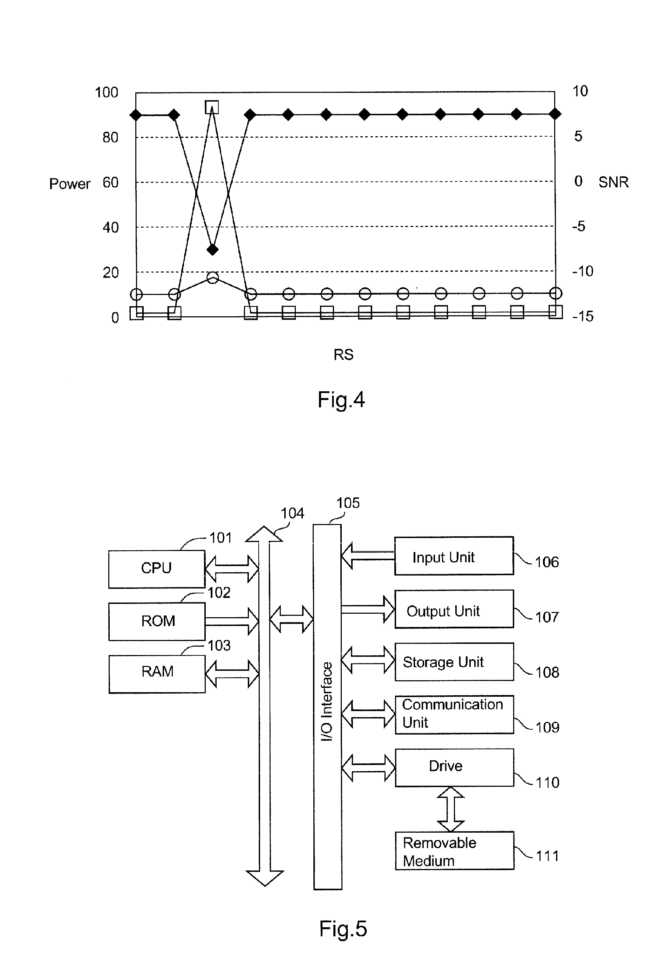

When a ratio of a bandwidth average reception power to a maximum reception power is calculated in order to perform a correction process if the calculated ratio value is equal to or greater than a predetermined threshold, an SNR being close to its actual value can be calculated as shown in Fig. 4, even in the case where conditions in reality are as shown in Fig. 7. Accordingly, a reception quality SNR after an EESM computation can accurately be calculated. Incidentally, in Fig. 4, a square represents a noise power, a circle means a signal power, and a lozenge represents an SNR. A vertical axis in Fig. 4 represents power or SNRs, and meanwhile a horizontal axis in Fig. 4 shows RSs.

Moreover, a further SNR correction may be conducted, in accordance with a level of an interference wave and a proportion of an interference wave existing in a bandwidth.

In other words, a ratio between an averaged reception power of an overall bandwidth and a reception power of each RS is calculated. Then, if a maximum value of ratios calculated exceeds a predetermined threshold, a correction process is performed for a signal power and a noise power. If the ratios calculated are equal to or less than the threshold, no correction process is performed. Afterwards, a measuring process on a reception quality SNR is performed by using EESM; and moreover, conducted is a correction in accordance with a level of an interference wave and a proportion of an interference wave existing in a bandwidth, and the reception quality SNR is reported to a higher-level layer.

Thus, a correction process is independently performed for a signal power, a noise power, and an SNR, only when a remarkably large interference to deteriorate a receiving performance exists in some partial bandwidth, so that an accurate reception quality can be measured.

Though, in the above description, an explanation is made with respect to a communication of a mobile phone making use of LTE, as an example; a similar method can be applied to a mobile phone and a Personal Handy-phone System (PHS), which make use of OFDM or FDM, as well as a wireless communication system such as a wireless Local Area Network (LAN).

The series of processes described above may be executed by means of hardware, and may also be executed by way of software. For executing the series of processes by way of software, a computer program constituting the software is installed into a computer, which is built in exclusive-use hardware, from a computer program recording medium; or the software is installed from a computer program recording medium, for example, into a general-purpose personal computer that can execute various functions with various programs being installed.

Fig. 5 is a block diagram showing a configuration example of hardware of a computer that executes the series of processes described above by way of a computer program.

In the computer; a central processing unit (CPU) 101, a read only memory (ROM) 102, and a random access memory (RAM) 103 are interconnected by using a bus 104.

Moreover, an I/O interface 105 is connected to the bus 104. Connected to the I/O interface 105 are; an input unit 106 including a keyboard, a mouse, a microphone, and the like; an output unit 107 including a display, a speaker, and the like; a storage unit 108 including a hard disc, a non-volatile memory, and the like; a communication unit 109 including a network interface and the like; and a drive 110 for driving a removable medium 111 such as a magnetic disc, an optical disc, a magnetic optical disc, or a semiconductor memory.

In the computer configured as described above, the CPU 101 loads a computer program, for example, stored in the storage unit 108, to the RAM 103 by way of the I/O interface 105 and the bus 104, and executes the program in order to carry out the series of processes described above.

The computer program to be executed by the computer (the CPU 101) is recorded, for being provided, in the removable medium 111 as a package medium; such as, for example, a magnetic disc (including a flexible disc), an optical disc (Compact Disc - Read Only Memory (CD-ROM), Digital Versatile Disc (DVD), and the like), a magnetic optical disc, or a semiconductor memory; or the computer program is provided via a wired or wireless transmission medium such as a local area network, the Internet, or digital satellite broadcasting.

Then, the computer program can be installed in the computer by way of being stored in the storage unit 108 through the I/O interface 105, while the removable medium 111 being mounted on the drive 110. Alternatively, the computer program can be installed in the computer by way of being stored in the storage unit 108, while being received in the communication unit 109 by the intermediary of a wired or wireless transmission medium. In another way, the computer program can previously be installed in the computer by way of storing the program in advance in the ROM 102 or the storage unit 108.

Incidentally, the program to be executed by the computer may be a computer program with which processes are carried out in chronological order along the sequence explained in this specification document, or may be a computer program with which processes are carried out in parallel or at the time as required, such as, in response to a call.

Furthermore, a scope of application of the embodiment of the present invention is not limited only to the embodiments described above, and various other variations may be made without departing from the concept of the present invention.

{Reference Signs List}

10. receiver          11. RF unit          12. FFT unit
13. channel estimation unit          14. demodulator
15. channel decoder          16. reception quality SNR estimation unit
21. signal & noise power estimation unit
22. signal & noise power correction unit
23. EESM computation unit          24. SNR correction unit
41. ratio calculation unit          42. determination unit
101. CPU          102. ROM          103. RAM          108. storage unit
109. communication unit          111. removable medium

**Claims**

**1.**  A receiver comprising:

a calculation means calculating a ratio of a signal power of each reference signal to an overall bandwidth average of the signal power;

a determination means determining whether or not a maximum value of calculated ratios exceeds a predetermined threshold; and

a first correction means correcting the signal power and the noise power when it is determined that the maximum value exceeds the predetermined threshold.

2. The receiver according to claim 1, further comprising:

a computation means calculating a Signal to Noise Power Ratio (SNR) by way of an Exponential Effective SNR Mapping (EESM) computation by using the signal power and the noise power supplied from the first correction means, and

a second correction means for correcting the SNR according to a level of an interference wave and a ratio of the interference wave to the bandwidth.

3. The receiver according to claim 2: wherein, the computation means conducts a sampling operation in the first correction means with a predetermined sampling interval, with respect to a reference signal to be used in the EESM computation, when it is determined that the maximum value does not exceed the predetermined threshold.

4. The receiver according to claim 3: wherein, the computation means changes the sampling interval, depending on a bandwidth.

5. A reception method comprising steps of:

calculating a ratio of a signal power of each reference signal to an overall bandwidth average of the signal power;

determining whether or not a maximum value of calculated ratios exceeds a predetermined threshold; and

correcting the signal power and the noise power when it is determined that the maximum value exceeds the predetermined threshold.

6. A computer program to operate a computer for an operation comprising steps of:

calculating a ratio of a signal power of each reference signal to an overall bandwidth average of the signal power;

determining whether or not a maximum value of calculated ratios exceeds a predetermined threshold; and

correcting the signal power and the noise power when it is determined that the maximum value exceeds the predetermined threshold.

Fig.1

EP 2 662 999 A1

Fig.2

```
                    ┌─────────────┐
                    │    Start    │
                    └─────────────┘
                           │
                           ▼
              ┌──────────────────────────────┐      S1
              │ Estimate Signal and Noise Power│
              └──────────────────────────────┘
                           │
                           ▼
              ┌──────────────────────────────┐      S2
              │      Average out in time      │
              └──────────────────────────────┘
                           │
                           ▼
              ┌──────────────────────────────┐      S3
              │   Calculate Power Ratio φ     │
              └──────────────────────────────┘
                           │
                           ▼                          S4
         YES      ◇ φ_MAX > P_TH_1 ? ◇        NO
          │                                    │
          ▼                                    ▼
  ┌──────────────┐  S5                ┌──────────────┐  S7
  │ Correct Power│                    │ Calculate SNR│
  └──────────────┘                    └──────────────┘
          │                                    │
          ▼                                    │
  ┌──────────────┐  S6                         │
  │ Calculate SNR│                             │
  └──────────────┘                             │
          │                                    │
          └──────────────┬─────────────────────┘
                         ▼
              ┌──────────────────────────────┐      S8
              │        Compute EESM           │
              └──────────────────────────────┘
                           │
                           ▼                          S9
  YES   ◇ N_peak × φ_MAX × N_RS > P_TH_2 ? ◇   NO
   │                                           │
   ▼                                           │
  ┌──────────────┐  S10                        │
  │  Correct SNR │                             │
  └──────────────┘                             │
   │                                           │
   └───────────────────┬───────────────────────┘
                       ▼
              ┌──────────────────────────────┐      S11
              │   Report to Higher-Level Layer │
              └──────────────────────────────┘
                           │
                           ▼
                    ┌─────────────┐
                    │     End     │
                    └─────────────┘
```

Fig.3

Fig.4

Fig.5

Fig.6

Fig.7

Fig.8

| INTERNATIONAL SEARCH REPORT | International application No. |
|---|---|
| | PCT/JP2012/050029 |

A.   CLASSIFICATION OF SUBJECT MATTER
*H04J11/00*(2006.01)i, *H04J1/00*(2006.01)i

According to International Patent Classification (IPC) or to both national classification and IPC

B.   FIELDS SEARCHED

Minimum documentation searched (classification system followed by classification symbols)
H04J11/00, H04J1/00

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
IEEE Xplore, CiNii

C.   DOCUMENTS CONSIDERED TO BE RELEVANT

| Category* | Citation of document, with indication, where appropriate, of the relevant passages | Relevant to claim No. |
|---|---|---|
| A | JP 2010-050557 A  (Nippon Telegraph and Telephone Corp.), 04 March 2010 (04.03.2010), paragraphs [0003], [0009] (Family: none) | 1-6 |
| A | JP 2008-245300 A  (Kyocera Corp.), 09 October 2008 (09.10.2008), claim 1; paragraph [0049] (Family: none) | 1-6 |
| A | JP 2006-005614 A  (Mitsubishi Electric Corp.), 05 January 2006 (05.01.2006), paragraph [0013] (Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 January, 2012 (19.01.12) | 31 January, 2012 (31.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/050029 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-318779 A  (Matsushita Electric Industrial Co., Ltd.), 07 November 2003 (07.11.2003), paragraph [0091] & US 2004/0247059 A1     & EP 1499032 A1 & WO 2003/090372 A1     & CN 1572064 A & AU 2003235296 A | 1-6 |
| A | Shahid Mumtaz, Atilio Gamerio, Jonathan Rodriguez, EESM FOR IEEE 802.16e: WiMaX, Computer and Information Science, 2008. ICIS 08. Seventh IEEE/ACIS International Conference, 2008.05.14, pp.361-366 | 2-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011000652 A
- JP 2005086587 A
- JP 2005253055 A

### Non-patent literature cited in the description

- *3GPP, TS 36.133 v8.7.0,* September 2009
- *3GPP, TS 36.213 v8.8.0,* September 2009
- **S. MUMTAZ ; A. GAMERIO ; J. RODRIGUEZ.** *EESM for IEEE 802.16e: Wimax, 7th IEEE/ACIS International Conference on Computer and Information Science, IEEE ICIS/ACIS,* 14 May 2008